# EUROPEAN PATENT APPLICATION

(11) **EP 4 714 394 A1**
(43) Date of publication of application: **25.03.2026**
(21) Application number: 25202373.4
(22) Date of filing: 16.09.2025
(51) Int. Cl.: A61C 7/00, A61C 7/08, A61C 7/16

(54) **KIT FOR MAKING AN ORTHODONTIC APPLIANCE WITH TUBES AND ELASTIC ARCH, METHOD FOR MAKING SAID KIT, AND METHOD FOR MAKING SAID APPLIANCE USING SAID KIT**

(30) Priority: 19.09.2024 IT 202400020932
(71) Applicant: FKS Holding Srl, 47521 Cesena FC (IT); Carrafiello, Alessandro, 42023 Cadelbosco di Sopra RE (IT)
(72) Inventor: CARRAFIELLO, Alessandro, 42023 Cadelbosco di Sopra (IT); SINTUCCI, Fabrizio, 47521 Cesena (FC) (IT)
(74) Representative: Busca, Andrea

(57) **Abstract**

The present invention concerns a kit (10) for making an orthodontic appliance, the kit comprising:
- a transfer mask (15), also referred to as a "mask" for simplicity;
- a plurality of tubes (2);
- an elastic arch (3) configured to be inserted into said tubes so as to be supported and guided by them;

where:
- a first part of tubes (2) are supported by said mask (15);
- at least one tube (2) is separated from said mask;

where:
- said elastic arch (3) is separated from said mask and from said first part of tubes,

and where
- the first part of tubes (2) is supported in a separable manner from said mask.

The invention also concerns a method of manufacturing said kit and a method of manufacturing said apparatus using said kit.

## Description

The present invention relates to a kit for making an orthodontic appliance with tubes and elastic arch, a method for making said appliance using said kit, and a method for making said kit.

### PRIOR ART

In the orthodontic field, we known appliances that are made by mounting various parts directly in the patient's mouth. In particular, it is known to apply a support tube for an elastic arch to each tooth of a patient's dental arch. The arch is inserted into all the tubes and thus performs an elastic action to reposition the teeth of the dental arch.

The use of tubes as supports for the elastic arch is very advantageous compared to traditional brackets, as it allows for much greater freedom of adaptation to the postural system, with enormous benefits for the patient.

The tubes are very small, so their effectiveness depends on where they are placed on the teeth. The tubes are applied manually, one by one, by the dentist in the most appropriate locations.

While this allows for a high degree of flexibility, it also requires that they be positioned with extreme care.

It is therefore perfectly understandable that the manufacture of such devices using the known manual technique requires considerable experience, great manual skill, and a great amount of time.

The general purpose of the present invention is to solve, completely or in part, the problems of the prior art.

A preferred purpose of the present invention is to enable even novice dentists to create orthodontic appliances with tubes and elastic arches that function optimally and are customized to the needs of each patient.

A preferred purpose of the present invention is to enable even doctors with poor manual skills to create orthodontic appliances with tubes and elastic arches that function optimally and are customized to the needs of each patient.

Another further purpose of the present invention is to reduce the time required to install an orthodontic appliance with tubes and elastic arch in a patient's mouth, so as to require a particularly short appointment time for the patient.

Another further purpose of the present invention is to ensure that each patient receives a high-quality appliance customized to their specific case.

Another further purpose of the present invention is to provide an orthodontic appliance with tubes and elastic arch that is easy to apply.

Another further purpose of the present invention is to provide an orthodontic appliance with tubes and elastic arch that is easy and inexpensive to manufacture.

### GENERAL INTRODUCTION

The technical problems are solved by a kit for making an orthodontic appliance with tubes and an elastic arch, by a method for making said kit, and by a method for making said appliance using said kit, as indicated in the attached claims.

### DETAILED DESCRIPTION

Further features and advantages of the present invention will be better understood from the following detailed description of its preferred implementation forms, made with reference to the attached drawings and given by way of example and not limitation. In these drawings
- figure 1 shows an orthodontic appliance with tubes and elastic arch applied to the upper dental arch of a patient and manufactured according to the present invention;
- figure 2 shows an orthodontic kit according to the present invention for making the appliance of figure 1;
- figure 3 shows a step in the process of making the appliance where a transfer mask carrying tubes from the kit shown in figure 2 is applied to a patient's dental arch (the orientation of the arch is reversed compared to figure 1 for ease of viewing).
- figure 4 shows a further step of said appliance manufacturing process, following that of figure 3, in which the transfer mask is removed from the dental arch, leaving the tubes it carried on the latter (the orientation of the arch is inverted with respect to figure 1 for ease of viewing);
- figure 5 shows a further step in the process of manufacturing the appliance, following on from figure 4, in which the elastic arch is inserted into the tubes attached to the teeth;
- figure 6 shows a detail of the positioning of the arch in figure 5 on a tooth that is particularly displaced with respect to the ideal arch of the dental arch;
- figure 7 shows an information pack, which is part of the kit in figure 2, including at least one kit assembly instruction customized according to the needs of each patient;

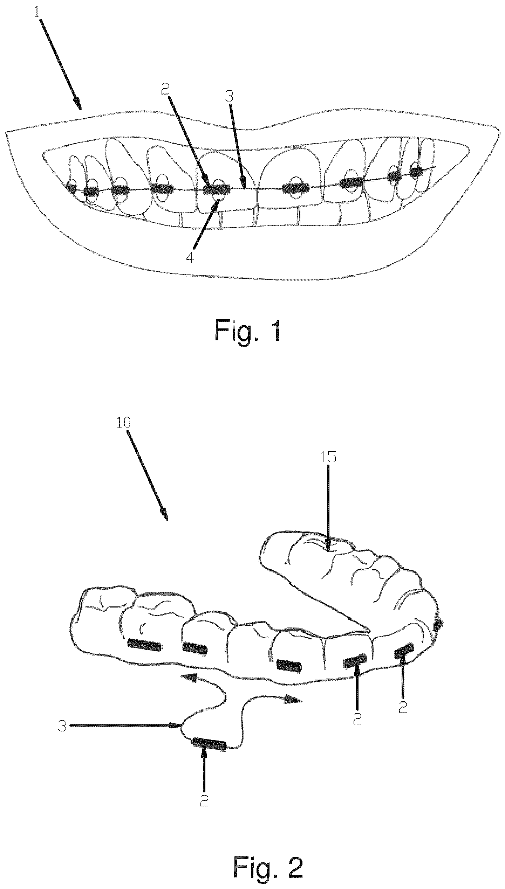

With reference to figure 1, an orthodontic appliance with a tube and elastic arch according to the present invention is shown, indicated as a whole with reference number 1 and referred to hereinafter for simplicity as simply "appliance."

Appliance 1 is intended as such only in its finished state, i.e., installed in a patient's mouth, where it comprises:
- a plurality of tubes 2
- an elastic arch 3 inserted into said tubes to be supported and guided so as to slide within the tubes;
- fastening means 4 for fastening the tubes 2 to a patient's teeth, such as, for example, classic light-curing polymerizing pastes used to fasten the tubes of the corresponding orthodontic appliances to tubes and elastic arches made manually according to the prior art.

Figure 2 shows the essential parts of a kit according to the present invention for making such an appliance 1. The kit is indicated as a whole with reference number 10 and comprises:
- a transfer mask 15;
- a plurality of said tubes 2;
- an elastic arch 3 configured to be inserted into said tubes so as to be supported and guided by them;
where:
- a first part of tubes 2 are supported by said mask;
- at least one tube 2 is separated from said mask and preferably slidably supported by said elastic arch.

Said elastic arch is separated from said mask and from said first part of tubes.

The first part of tubes 2 is supported in a separable manner from said mask.

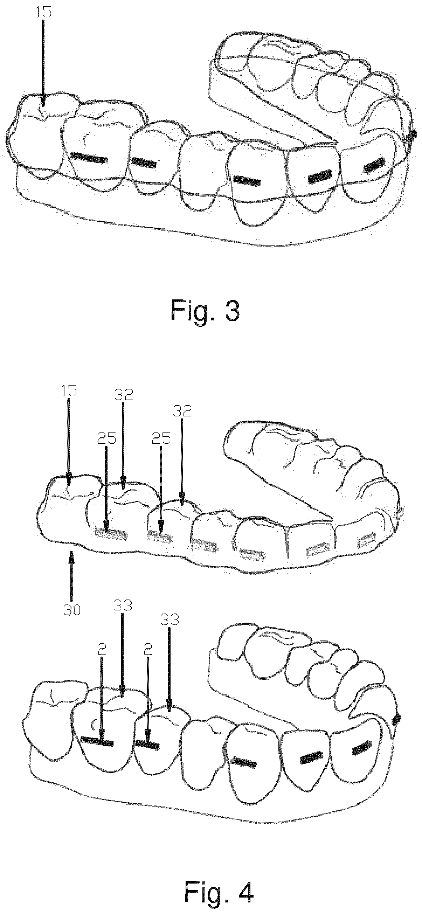

For this purpose, for example, the mask comprises a series of recesses 25 for accommodating said tubes 2, clearly visible in Figure 4, in which the latter are retained, for example, by elasticity. For this purpose, preferably at least the recesses 25 are made of elastic material, more preferably the entire mask 15 is made of elastic material.

Alternatively, it is possible, for example, to retain the tubes 2 in the recesses 25 by gluing.

In general, it is preferable that the mask 15 be made of elastic material, for example EVA.

According to another preferable general feature, the recesses 25 of the mask 15, or the entire mask, are made of transparent material configured to allow the passage of polymerizing light. In this way, as will be clarified below, it is possible to adhere the tubes 2 to the teeth by polymerizing a polymerizable material before removing the mask: this material is, for example, a classic polymerizing composite material, known in jargon as "flow," used in orthodontics.

The mask 15 has a customized shape for each patient, where it is preferably configured to trace at least part of a dental arch of said patient, more preferably to trace the entire dental arch.

The first part of tubes 2 has a predetermined position relative to mask 15, preferably said position is a position customized for each patient. More preferably, mask 15 has a plurality of molds 32 of a patient's teeth 33, and each tube 2 of the first part of tubes 2 is positioned at a respective mold (figure 4). Preferably, the position of each tube 2 at the corresponding mold is customized for each patient.

For the sake of completeness, we note that mask 2 defines a channel 30 for housing a dental arch, or part thereof, and that it supports said first part of tubes 2 inside said channel, preferably inside recesses 25 open onto said channel.

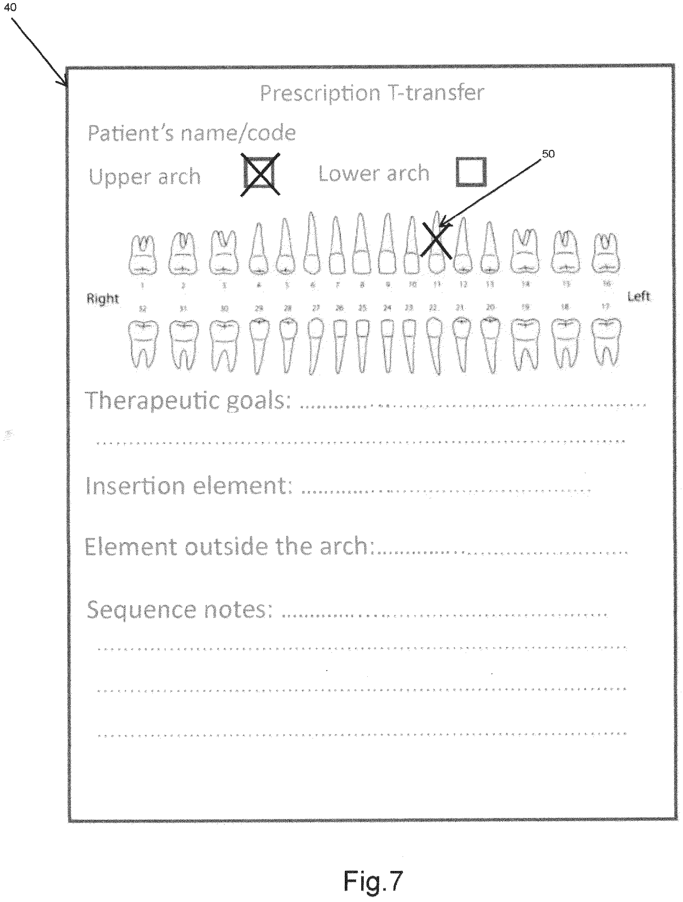

The kit 10 preferably also includes an information package 40, comprising, for example, assembly instructions for the appliance 1, an example of which is shown in figure 7.

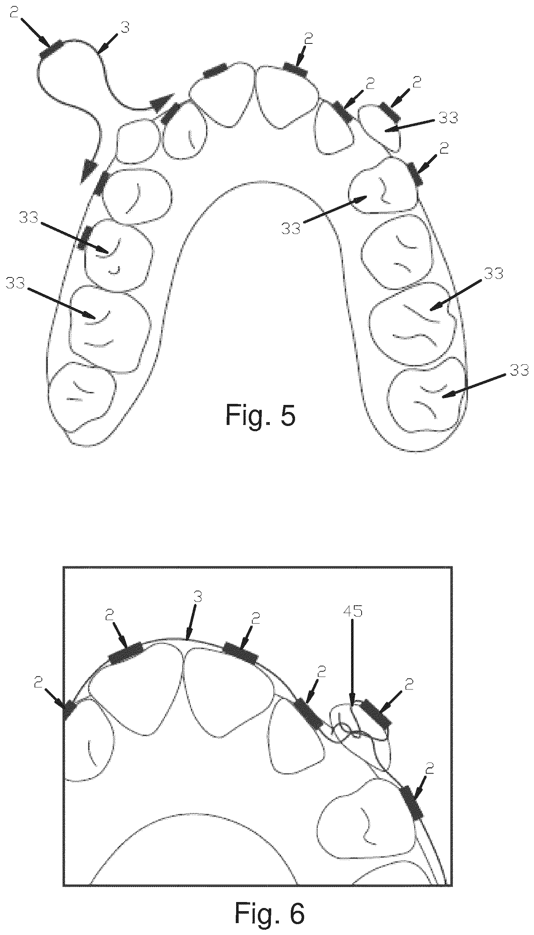

This information may include, for example, an indication 50 of one or more tubes 2 that should not be crossed directly by the arch, but should be connected to it by alternative coupling means, such as binding means 45, an example of which is shown in figure 6. This indication includes, for example, an indication of the respective tooth 33 to which said tube will be attached, since the mask 15 also includes the tube 2 for that tooth.

The process of creating this kit 10 allows for customization thanks to the following steps:
- make the impression of a patient's dental arch;
- make a transfer mask 15 that is a cast of said dental arch, or part thereof;
- apply to the mask the aforementioned part of tubes 2 in a manner that can be separated from the mask and in a predetermined position, where the number of tubes applied to the mask is less than the number of teeth in said arch

- prepare an elastic arch 3 configured to be inserted into said tubes when transferred onto the teeth and fixed to them, targeting them all;
- at least one tube 2 separated from said mask, so as to be in addition to those applied to the mask, is applied freely sliding to the arch or is arranged separately from both the mask 15 and the arch 3.

Preferably, the mask is characterized by at least one mold of a tooth 33 without a tube 2, where said mold is included between two tooth molds according to the sequence of teeth in said arch, where said two molds preferably each include a respective tube 2. For example, the mold 33 without a tube is of a canine tooth. This advantageously makes it easier to insert the arch, as will be explained below.

Advantageously, the position of the tubes can be decided by an expert who may be different from the dentist who will apply the appliance to the patient, for example:
- an expert dentist in the dental clinic who will apply the appliance to the patient;
- an expert in a mask production laboratory 15 separate from the dental clinic that will apply the appliance to the patient.

Preferably, the kit manufacturing process involves the following steps:
- a dental clinic requests the manufacture of the kit from an external laboratory, for example by sending at least one impression of a patient's dental arch together with the request;
- the external laboratory manufactures the kit by positioning the tubes in the transfer mask 15 independently or according to the instructions provided by said dental clinic.

This mask is made of a transparent or semi-transparent material that is cured by a polymerizing light.

The process of manufacturing said orthodontic appliance 1 comprises the process of manufacturing the kit as described above, and also comprises the following steps:
- applying a predetermined amount of light-curable material, such as the classic flow material used in orthodontics, to each tube 2 of the transfer mask 15;
- applying the transfer mask 2 with said tubes 2 and said light-curing material to said dental arch of the patient;
- curing said light-curing material by means of a light-curing lamp applied to pass through the transfer mask 15, which is at least partially transparent or semi-transparent, said light being applied, for example, by means of a known light-curing lamp;

- remove the mask 15 from the dental arch after said polymerization in such a way that the tubes 2 separate from the mask 15 and remain attached to the teeth 33,
- preferably reinforce the adhesion of the tubes 2 to the teeth by applying an additional layer of polymerizing material, polymerizing,
- insert the arch 3 into a tube 2 separated from the teeth and into the tubes 2 attached to the teeth, and finally attach the separated tube 2 to a tooth using polymerizing material.

Of course, the application of tubes using light-cured polymerized material is just one example, and any other tooth adhesion material can be used, even in view of possible future developments in materials.

Preferably, arch 3 is inserted into the tubes attached to the teeth by inserting a first end into one or more tubes 2, and a second end into one or more tubes 2 other than the first ones. Subsequently, the tube separated from the teeth and inserted so as to slide on arch 3 is attached to the teeth in a position between at least two tubes already attached to the teeth.

Preferably, arch 3 is inserted into tubes 2 following instructions 50 in information package 40. Preferably, the instructions indicate at least one tube 2 into which the arch should not be inserted but joined by alternative means, for example by means of ties.

Advantageously, the fact that one tube in the kit is free relative to the mask, to be fixed to the teeth manually after insertion of arch 3 into the tubes already fixed to the teeth by means of the mask, greatly simplifies the arch insertion operations, as it is not necessary to make excessive curves. Nevertheless, the procedure does not require any particular skill in positioning the tubes, as their position on the teeth is already determined by the transfer mask 15. Any dentist will therefore find it very easy to create extremely effective appliances 1 thanks to the specific, customized position of the tubes on the teeth. The application time of the kit is also particularly reduced compared to the traditional manual technique, as the decision on the position of the tubes is made during the construction phase of the kit in the laboratory, therefore in the absence of the patient.

### GENERAL MEANING OF TERMS

In understanding the purpose of the present invention, the term "comprising" and its derivatives, as used herein, are intended as open-ended terms specifying the presence of the declared characteristics, elements, components, groups, integers and/or phases, but not excluding the presence of other undeclared characteristics, elements, components, groups, integers and/or phases. The above also applies to words with similar meanings such as the terms "including", "having" and their derivatives. In addition, the terms "part", "section", "portion", "member" or "element" when used in the singular may have the dual meaning of a single part or a plurality of parts. As used herein to describe the form(s) of implementation mentioned above, the following directional terms "forward", "backward", "above", "below", "vertical", "horizontal", "underneath" and "transverse", as well as any other similar directional terms refer to the form of implementation described in the operative position. Finally, grade terms such as "substantially", "about" and "approximately" as used herein mean a reasonable amount of deviation of the modified term such that the end result is not significantly changed.

While only selected implementation forms have been chosen to illustrate the present invention, from this description it will be clear to those expert in the field that various modifications and variations may be made without departing from the purpose of the invention as defined in the attached claims. For example, the size, shape, position or orientation of the various components may be modified as needed and/or desired. Components shown directly connected or in contact with each other may have intermediate structures interposed between them. The functions of one element can be performed by two and vice versa. The structures and functions of one form of implementation can be adopted in another one. It is not necessary that all advantages are present in a particular form of implementation at the same time. Each characteristic that is original compared to the prior art, alone or in combination with other characteristics, should also be considered a separate description of further inventions by the applicant, including structural and/or functional concepts incorporated by those characteristics. Therefore, the previous descriptions of implementation forms according to the present invention are provided for illustrative purposes only and not for the purpose of limiting the invention as defined by the attached claims and their equivalents.

## Claims

1. Kit (10) for making an orthodontic appliance, the kit comprising:
- a transfer mask (15), also referred to as a "mask" for simplicity;
- a plurality of tubes (2);
- an elastic arch (3) configured to be inserted into said tubes so as to be supported and guided by them;
where:
- a first part of tubes (2) are supported by said mask (15);
- at least one tube (2) is separated from said mask;
where:
- said elastic arch (3) is separated from said mask and from said first part of tubes, and where
- the first part of tubes (2) is supported in a separable manner from said mask.

2. Kit according to claim 1, **characterized by** the fact that the mask 15 has a plurality of molds (32) of the teeth (33) and each tube 2 of the first set of tubes (2) is positioned at a respective mold,
wherein the mask is **characterized by** at least one mold of a tooth (33) without a tube (2).

3. Kit according to claim 2, **characterized by** the fact that said molds (33) are configured to be customized to correspond to a patient's teeth, and each tube 2 of the first set of tubes (2) is positioned at a respective mold in a customized position.

4. Kit according to claim 2 or 3, **characterized by** the fact that said mold (32) without tube (2) is included between two molds (32) with tube (2).

5. Kit according to any of the previous claims, **characterized by** the fact that the mask (15) comprises a series of housing recesses (25) for said first part of tubes (2) in which the latter are held in a separable manner.

6. Kit according to claim 5, **characterized by** the fact that at least the recesses (25) are made of elastic material.

7. Kit according to claim 5 or 6, **characterized by** the fact that at least the recesses (25) are made of transparent or semi-transparent material configured to allow the passage of polymerizing light.

8. Kit according to any of the previous claims, **characterized by** the fact that the kit (10) comprises an information package (40) including at least instructions for securing said arch to said first pipe section.

9. Method for producing a kit (10) according to any of the previous claims, **characterized by** the fact that it comprises customizing said kit through the following steps:
- make an impression of a patient's dental arch;
- use this impression to make a transfer mask (15) that is a cast of the dental arch, or part of it;
- applying to the mask said first part of tubes (2) in a manner that can be separated from the mask and in a predetermined position, where the number of tubes applied to the mask is less than the number of teeth of said dental arch
- prepare an elastic arch (3) configured to be inserted into said first part of tubes when transferred onto the teeth and fixed to them, targeting them all;
prepare said separate tube (2) applied freely sliding on the arch (3) or separated from both the mask (15) and the arch (3).

10. Method according to claim 9, **characterized by** the fact that the position of the first part of the tubes in the mask is decided by a person other than the dentist who will apply the appliance to the patient.

11. Method according to claim 9 or 10 comprising the following steps:
- a dental clinic requests an external laboratory to produce a customized kit for a predetermined patient, transferring at least one impression of a dental arch of said patient to the laboratory;
- the external laboratory produces the kit using the impression, positioning the tubes (2) in the transfer mask (15) independently or according to instructions provided by said dental clinic.

12. Method for manufacturing an orthodontic appliance (1) comprising the method for manufacturing the kit according to any claim from 9 to 11, in addition, the method for manufacturing an orthodontic appliance comprises the following steps:
- apply a predetermined amount of light-curable material to each tube (2) of the transfer mask (15);
- apply the transfer mask (2) with said tubes (2) and said polymerizable material to a dental arch of the patient corresponding to said impression;
- polymerize said polymerizable material using a polymerizing light applied to pass through the transfer mask (15) which is at least partially transparent or semi-transparent to said light,
- remove the mask (15) from the dental arch after said polymerization in such a way that the first part of the tubes (2) separates from the mask (15) and remains attached to the teeth (33),
- inserting the arch (3) into the tube (2) separated from the teeth, if it is not already inserted, and into the first part of tubes (2) attached to the teeth, and finally attaching said separated tube (2) to a tooth using polymerizing material.

13. Method for manufacturing an orthodontic appliance (1) according to claim 12, **characterized by** the fact that the arch (3) is inserted into the tubes attached to the teeth by inserting a first end into one or more tubes (2), and a second end into one or more tubes (2) other than the first ones, subsequently the tube separated from the teeth and slidably inserted onto the arch (3) is attached to the teeth in a position between at least two tubes already attached to the teeth.

14. Method for making an orthodontic appliance (1) according to claim 12 or 13, **characterized by** the fact that the arch (3) is joined to the first part of tubes (2) attached to the teeth for insertion and by alternative joining means, according to the instructions in an information package 40 included in the kit.
